(19) Europäisches Patentamt

European Patent Office

Office européen des brevets

(11) **EP 1 085 104 B1**

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(51) Int Cl.7: **C22B 7/02**, C22B 3/06, C22B 3/12, C22B 21/00, A62D 3/00

(21) Anmeldenummer: **00119247.5**

(22) Anmeldetag: **06.09.2000**

(54) **Verfahren zum Überführen von Rückständen aus der Müllverbrennung in deponierbares Material unter Verwendung eines oxidierenden Waschvorganges**

Method of working-up incineration residues into a disposable material using an oxidizing wash treatment

Méthode pour retraiter des résidus d'incinération de déchets en un matériau apte à être déposé moyennant un traitement de lavage oxydant

(84) Benannte Vertragsstaaten:
**CH DE FR IT LI SE**

(30) Priorität: **16.09.1999 CH 169799**

(43) Veröffentlichungstag der Anmeldung:
**21.03.2001 Patentblatt 2001/12**

(73) Patentinhaber: **Von Roll Umwelttechnik AG**
**8005 Zürich (CH)**

(72) Erfinder:
• **Frey, Ruedi**
**8307 Effretikon (CH)**
• **Haag, Olaf**
**8003 Zürich (CH)**

(74) Vertreter: **Patentanwälte**
**Schaad, Balass, Menzl & Partner AG**
**Dufourstrasse 101**
**Postfach**
**8034 Zürich (CH)**

(56) Entgegenhaltungen:
EP-A- 0 227 024          EP-A- 0 482 335
BE-A- 1 000 323          DE-A- 3 324 133
FR-A- 2 654 020          US-A- 4 254 088
US-A- 4 954 137

• PATENT ABSTRACTS OF JAPAN vol. 1996, no. 12, 26. Dezember 1996 (1996-12-26) & JP 08 217449 A (AGENCY OF IND SCIENCE &AMP;TECHNOL), 27. August 1996 (1996-08-27)
• PATENT ABSTRACTS OF JAPAN vol. 1997, no. 04, 30. April 1997 (1997-04-30) & JP 08 323321 A (MITSUBISHI MATERIALS CORP), 10. Dezember 1996 (1996-12-10)

## Beschreibung

Die Erfindung betrifft ein Verfahren zum Überführen von metallischen Bestandteilen, die unedler sind als Eisen, enthaltenden Rückständen aus der Müllverbrennung, insbesondere von Flugasche in deponierbares Material, mittels eines Waschvorganges durch Suspendieren der Feststoffe in einer wässrigen Waschflüssigkeit. Unter dem Begriff "unedler als Eisen" werden Metalle verstanden, die in der elektrochemischen Spannungsreihe vor Eisen stehen.

Flugasche, die aus den Abgasen einer Müllverbrennungsanlage ausgeschieden wird, enthält u.a. giftige Schwermetalle, die entfernt werden müssen, bevor die Flugasche in Deponien entsorgt werden kann. Die Entfernung der Schwermetalle kann, wie sie in der DE-B 33 20 466 und in der EP-A-0 482 335 beschrieben ist, durch eine saure Wäsche der Flugasche erfolgen. Es ist auch bekannt, die Flugasche einer neutralen bzw. alkalischen Wäsche zwischen einem pH-Wert von 7 und 12 zu unterwerfen, die gewaschene Flugasche mit einem hydraulischen Bindemittel zu verfestigen und das verfestigte Material zu deponieren.

Diese bekannten Methoden ergeben im allgemeinen brauchbare Resultate, wenn die Flugasche aus der Verbrennung von Hausmüll allein stammt. Hingegen sind die Resultate nicht befriedigend, wenn die Flugasche aus der Verbrennung von Müll mit höherer Schwermetallfracht, wie z.B. Gewerbe- und Industriemüll und Autoshredder-Rückständen, stammt. Bei der sauren Wäsche verbleibt in den letztgenannten Fällen eine unzulässig hohe Menge von Blei und Kupfer in der gewaschenen Flugasche bzw. wird die Entstehung von metallischen Agglomeratpartikeln im Waschgefäss nach der sauren Wäsche beobachtet, die bis 70% an Blei enthalten.

Bei der neutralen Wäsche beobachtet man in der Anwesenheit von Magnesium, Aluminium, etc. im alkalischen Milieu des hydraulischen Bindemittels eine Wasserstoffentwicklung. Letztere kann Sicherheitsprobleme verursachen. Ausserdem entstehen in Anwesenheit solcher Metalle beim Verfestigen poröse Körper, die ein grösseres Deponievolumen benötigen und in den Deponien von Wasser verstärkt ausgelaugt werden. Letzteres bewirkt das Einspülen von Schwermetallverbindungen in das Grundwasser.

Aus der JP 08 217 449 A ist bekannt, Vanadium und Nickel durch eine oxydative saure Wäsche bei pH-Werten von 0,5 bis 3 aus Erdölasche zu gewinnen. Durch die Rückgewinnung dieser wertvollen Metalle werden die Kosten der thermischen Energieerzeugung aus Erdöl gesenkt.

Aufgabe der vorliegenden Erfindung ist es, mittels der sauren oder der neutralen Wäsche Flugasche aus der Müllverbrennung in ein gefahrlos deponierbares Material zu überführen und insbesondere Magnesium und Aluminium aus der Flugasche zu entfernen.

Diese Aufgabe wird durch die kennzeichnenden Merkmale von Anspruch 1 gelöst. Bevorzugte Ausführungsformen der Erfindung bilden den Gegenstand der abhängigen Ansprüche.

Es wurde beobachtet, dass im Müll vorhandenes metallisches Aluminium, was oft in Form von Aluminiumfolien, Aluminiumformkörpern oder Verbundwerkstoffen in den Müll gelangt, bei der Verbrennung nicht vollständig oxidiert wird. Besonders Teile von Folien werden durch die Rauchgase mitgerissen und gelangen so in die Flugasche. Das nicht oxidierte metallische Aluminium wird, wie es beobachtet worden ist, während der sauren Wäsche aufgelöst. Bei diesem Vorgang werden Ionen von Metallen, die edler sind als Aluminium, d.h. in der elektrochemischen Spannungsreihe nach Aluminium stehen, reduziert, währenddem Aluminium zur ionischen Form oxidiert wird gemäss der Gleichung

$$3\,Me^{2+} + 2\,Al \rightarrow 2\,Al^{3+} + 3\,Me.$$

Bei Me handelt es sich, je nach Herkunftsort des Mülls, um verschiedene Schwermetalle, sehr oft um Blei und Kupfer. Analoge Vorgänge wie mit Aluminium finden mit Magnesium, Zink, etc. statt.

Um die Reduktion der Metallionen von Metallen, die edler sind zu verhindern, wird erfindungsgemäss die saure Wäsche unter oxidierenden Bedingungen und unter Zugabe des Oxydationsmittels während des Waschvorganges durchgeführt. Dabei werden metallische Bestandteile die unedler sind als Eisen, insbesondere Aluminium, ohne Reduktion von anderen Metallen in eine höhere Oxidationsstufe überführt. Entsprechend entfällt das Ausfällen von Metallen während des Waschvorganges und die von der Waschflüssigkeit abgetrennte Flugasche kann problemlos deponiert werden.

Das Waschen der Flugasche unter oxidierenden Bedingungen ergibt auch bei der neutralen Flugaschenwäsche problemlos deponierbare Produkte. Da in diesem Fall z.B. metallisches Aluminium bereits während der Wäsche zu Aluminiumionen oxidiert wird, findet nach dem Zumischen des hydraulischen Bindemittels zur von der Waschflüssigkeit getrennten Flugasche keine Reaktion mehr statt. Entsprechend entfällt die Entwicklung von Wasserstoff und nach der Verfestigung wird ein porenfreies Material erhalten, das problemlos deponiert werden kann.

Da die Oxidation von unedleren metallischen Bestandteilen sowohl im sauren Bereich als auch bei pH-Werten von über 7 möglich ist, ist dieses Verfahren sowohl für die saure als auch für die neutral-alkalische Wäsche möglich.

Erfindungsgemäss muss das Oxidationsmittel während des sauren oder neutral bis alkalischen Waschvorganges präsent sein. Man suspendiert die Flugasche in der Waschflüssigkeit und die Suspension wird mit dem Oxidationsmittel versetzt. Ein Teil des Oxydationsmittels kann bereits vor Beginn des Waschvorganges zugegeben werden.

Als Oxidationsmittel kommen alle bekannten üblicherweise in der Industrie eingesetzten Oxidationsmittel in Betracht. Bevorzugt werden Oxidationsmittel die Sauerstoff abgeben, insbesondere Wasserstoffperoxid wegen seiner einfachen Handhabung. Wasserstoffperoxid kann beispielsweise in Form einer mindestens 30%igen Lösung eingesetzt werden. Ausser mit Wasserstoffperoxid wurden mit dem Einblasen von Luft und Sauerstoff, durch die Zugabe von Natriumhypochlorit und $FeCl_3$ geeignete Resultate erhalten. $FeCl_3$ ist das wirtschaftliche Oxydationsmittel der Wahl, wenn ohne Sauerstoffabgabe gearbeitet werden soll.

Die Dosierung des Oxidationsmittels erfolgt in Funktion des Redoxpotentials. Der Redoxpotential lässt sich in wässriger Lösung genau messen; entsprechend ist eine genaue Dosierung des Oxidationsmittels möglich. Der gemessene Redoxpotential muss während des Oxidationsvorgangs während der Flugaschenwäsche grösser als 0 sein, vorzugsweise grösser als +100 mV. Bei der praktischen Ausführung des erfindungsgemässen Verfahrens hat sich gezeigt, dass z.B. bei der sauren Wäsche ohne Oxidationsmittel ein Redoxpotential von ca. -400 mV vorliegt. Sofort nach Zugabe des Oxidationsmittels steigt der Redoxpotential auf einen Wert von +200 mV. Um bis zum Abschluss des Waschvorganges einen positiven Redoxpotential aufrechtzuerhalten werden in der Gössenordnung von 1% des Flugaschengewichts an reinem Wasserstoffperoxid benötigt.

Der Wirkungsgrad des erfindungsgemässen Verfahrens wurde in der Extraktionsausbeute von Kupfer ausgedrückt. Bei Betriebsversuchen wurde die Extraktionsausbeute von Kupfer von ca. 10% ohne Oxidationsmittel auf über 60% mit Oxidationsmittel verbessert. Durch Erhöhung des Extraktionsgrades der Schwermetalle aus der Flugasche konnte auf die wirtschaftlich und technisch aufwendige Behandlung der gewaschenen Flugasche mit einem schwefelhaltigen Fällungsmittel wie sie in der EP-A-0 482 335 beschrieben ist verzichtet werden.

Die Erfindung wird durch die nach folgenden Vergleichsbeispiele weiter veranschaulicht.

**Beispiel 1**: Saure Flugaschenwäsche.

Die saure Flugaschenwäsche wurde mit der sauren Abschlämmung aus dem Rauchgaswäscher in einer Kaskade mit drei Rührbehältern, in denen die Flugasche suspendiert wurde, durchgeführt. Der Durchsatz an Rohasche betrug 300 kg/h und an Waschwasser 3 m³/h. Der pH-Wert im 1. Extraktionsgefäss betrug 3,3, im 2. 3,7 und im 3. 3,9. Die oxidierenden Bedingungen wurden durch Zugabe von 35% $H_2O_2$ herbeigeführt. Bei einem Versuch wurde ohne Oxidationsmittel und bei anderen Versuchen unter Oxidationsmittelzugabe in den ersten Rührbehälter gewaschen. Nach der Kaskade wurde die Flugasche auf einem Vakuumbandfilter kontinuierlich vom sauren schwermetallhaltigem Filtrat getrennt. Das Filtrat wurde in einer Abwasseranlage von den Schwermetallen befreit. Nach Filtrieren des gewaschenen Rückstandes wurde in der Mutterlauge die Menge des pro Gramm Flugasche ausgewaschenen Kupfers bestimmt. Ausserdem wurden die Eluatwerte der gewaschenen Flugasche ermittelt. Letztere erfolgte gemäss TVA (Technische Verordnung über Abfälle) mit kontinuierlich mit CO2 gesättigtem Wasser im Verhältnis Flugasche zu Wasser 1:10.

Die Resultate eines Betriebsversuches sind in den nachfolgenden Tabellen 1a und 1b zusammengefasst. In Tabelle 1a sind die Eluatwerte in mg/l und in Tabelle 1b in % dargestellt.

Tabelle 1 a

| H2O2 35% l/h | Redoxpotential mV * | Extraktions aubeute Cu in % | Eluatwerte nach der Wäsche in mg/l | | | |
|---|---|---|---|---|---|---|
| | | | Cu | Pb | Zn | Cd |
| 0 | -280 | 14 | 3,41 | 1,00 | 2,93 | 0,05 |
| 10 | 333 | 63 | 0,08 | 0,84 | 0,65 | 0,02 |
| 20 | 380 | 66 | 0,10 | 0,45 | 0,60 | 0,01 |
| 70 | 420 | 67 | 0,04 | 0,72 | 0,50 | 0,02 |

Tabelle 1 b

| H2O2 35% l/h | Redoxpotential mV * | Extraktions aubeute Cu in % | Eluatwerte nach der Wäsche in % | | | |
|---|---|---|---|---|---|---|
| | | | Cu | Pb | Zn | Cd |
| 0 | -280 | 14 | 682 | 100 | 29,3 | 50 |
| 10 | 333 | 63 | 16 | 84 | 6,5 | 20 |
| 20 | 380 | 66 | 20 | 45 | 6 | 10 |
| 70 | 420 | 67 | 8 | 72 | 5 | 20 |

[x] Das Redoxpotential wurde mit einer Ag/AgCl-Bezugselektrode gemessen. Der Nullpunkt der elektrochemischen Spannungsreihe wird durch die Wasserstoffelektrode definiert. Deshalb ist zu den obigen Messwerten in mV jeweils 188mV zu addieren.

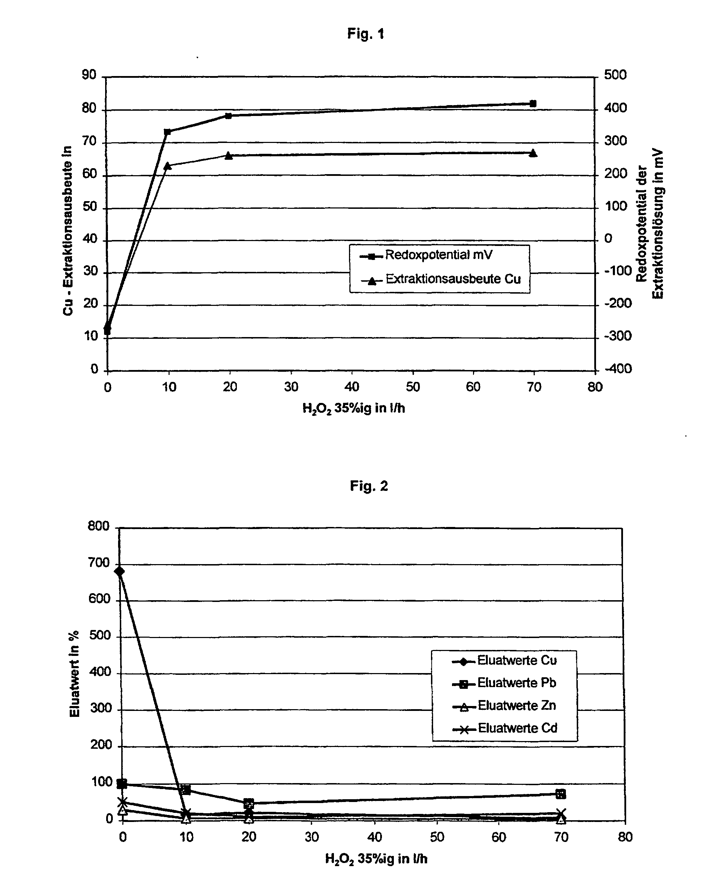

Wie die Resultate, die graphisch in Figur 1 und 2 dargestellt sind, zeigen, wird durch die oxidative Wäsche ein metallarmes, problemlos deponierbares Material gewonnen.

**Beispiel 2**: Abbinden der gewaschenen Flugasche.

Die Flugasche wurde in eine Anlage mit einer Kaskade von zwei Rührbehältern in Wasser suspendiert. Die Mutterlauge wurde kontinuierlich auf einem Vakuumbandfilter von der gewaschenen Flugasche getrennt. Das Filtrat wurde in einer Abwasserbehandlungsanlage von den herausgelösten Salzen getrennt. Die gewaschene Flugasche wurde in einem Zwangsmischer mit einer Zement enthaltenden hydraulischen Bindemittelzubereitung vermischt. Nach dem Abbinden, d.h. Verfestigung der Masse aus gewaschener Flugasche und hydraulischem Bindemittel wurde die Dichte des verfestigten Materials und die Volumenzunahme beim Quellen wie folgt bestimmt: Die Masse wird in kubische Formkörper (Kantenlänge 1 m, oben offen) abgefüllt. Das Volumen vor und nach dem Abbinden (mit oder ohne Quellen) wird durch messen der Schichthöhe errechnet. Das Gewicht der eingefüllten Masse ist aus der Differenzwägung "Zwangsmischer gefüllt" - "Zwangsmischer entleert" bekannt. Dichte = Quotient aus Gewicht und Volumen.

Die Betriebsbedingungen und die Prüfresultate sind in der Tabelle 2 zusammengestellt.

Tabelle 2

| | | ohne Oxydation | mit Oxydation |
|---|---|---|---|
| Betriebs bedingungen | Durchsatz Flugasche | 500 kg/h | 500 kg/h |
| | Durchsatz Waschwasser sauer | 2,5 m$^3$/h | 2,5 m$^3$/h |
| | pH-Wert Extraktion | 9 - 10 | 9 - 10 |
| | Dosierung Oxydationsmittel in Extraktionsbehälter 1 | --- | 20 l/h $H_2O_2$ 35%ig |
| | Redoxpotential Extraktion | -220 mV | + 300 mV |
| | Bindemittelzugabe zum entwässerten Reststoff | 30 % bezogen auf Flugasche | 30 % bezogen auf Flugasche |
| Resultate | Volumenzunahme (Quellen) | 10 - 30 % | <2% |
| | Dichte des verfestigten Materials | ca. 1,4 t/m$^3$ | ca. 1,6 t/m$^3$ |

Durch die Zugabe des Oxidationsmittels während des Waschvorganges wird eine höhere Dichte, ohne Quellen, erzielt und damit ein problemlos deponierbares Material mit kleinem Volumen erzielt.

Obwohl die vorliegende Erfindung hier anhand der Flugaschenwäsche veranschaulicht worden ist, versteht es sich von selber, dass sie auf alle anderen Waschvorgänge von Rückstanden aus der Müllverbrennung analog angewendet werden kann.

Das erfindungsgemässe Verfahren besitzt ausser den technischen auch wirtschaftliche Vorteile. Währenddem die Betriebskosten der hier benützten Anlage unter Verwendung von $Ca(OH)_2$ und TMT 15 als Fällungsmittel gemäss dem Stand der Technik CHF 76,50/h betrugen, sind gemäss der Erfindung unter Verwendung von $H_2O_2$ als Oxidationsmittel Betriebskosten von CHF 15,50/h entstanden.

**Patentansprüche**

1.  Verfahren zum Überführen von Rückständen aus der Müllverbrennung, die metallische Bestandteile, die unedler sind als Eisen, enthalten, in ein deponierbares Material mittels eines Waschvorganges durch Suspendieren der Rückstände in einer wässrigen Waschflüssigkeit, **dadurch gekennzeichnet, dass** man die in der Waschlüssigkeit dispergierten Rückstände oxidierenden Bedingungen unterwirft, um die metallischen Bestandteile in eine höhere Oxidationsstufe zu überführen, welche unedler als Eisen sind, wobei man während des Waschvorganges ein Oxidationsmittel der Suspension zugibt, das Redoxpotential der Waschflüssigkeit misst und die Dosierung des Oxidationsmittels in Abhängigkeit vom gemessenen Wert steuert damit die Reduktion der metallionen von Metallen, die edler als Eisen sind, verhindert wird.

2.  Verfahren nach Anspruch 1, **dadurch gekennzeichnet, dass** man Rückstände, die metallisches Aluminium enthalten, einem Waschvorgang unterwirft.

3.  Verfahren nach Anspruch 1 oder 2, **dadurch gekennzeichnet, dass** man Flugasche aus Müllverbrennungsanlagen in ein deponierbares Material überführt.

4.  Verfahren nach einem der vorangehenden Ansprüche, **dadurch gekennzeichnet, dass** man den Waschvorgang bei einem sauren pH-Wert, vorzugsweise beim einem pH-Wert von 3 bis 5, durchführt.

5.  Verfahren nach einem der Ansprüche 1 bis 3, **dadurch gekennzeichnet, dass** man den Waschvorgang bei einem alkalischen pH-Wert, vorzugsweise bei einem pH-Wert von 7 bis 12, durchführt.

6.  Verfahren nach einem der Ansprüche 1 bis 5, **dadurch gekennzeichnet, dass** man ein Oxidationsmittel auch vor dem Waschvorgang zur Waschflüssigkeit gibt.

7.  Verfahren nach einem der vorangehenden Ansprüche, **dadurch gekennzeichnet, dass** man ein Oxidationsmittel verwendet, das Sauerstoff abgibt.

8.  Verfahren nach einem der vorangehenden Ansprüche, **dadurch gekennzeichnet, dass** man als Oxidationsmittel $H_2O_2$, vorzugsweise in Form einer mindestens 30%igen Lösung einsetzt.

9.  Verfahren nach einem der vorangehenden Ansprüche, **dadurch gekennzeichnet, dass** man bei einem Redox-potential von $\geq +100$ mV arbeitet.

**Claims**

1.  Process for converting residues from refuse incineration which contain metallic constituents which are more base than iron into a material which can be landfilled, by means of a washing operation by suspending the residues in an aqueous washing liquid, **characterized in that** the residues which are dispersed in the washing liquid are subjected to oxidizing conditions in order to convert the metallic constituents into a higher oxidation state, which are more base than iron, an oxidizing agent being added to the suspension during the washing operation, the redox potential of the washing liquid being measured and the metering of the oxidizing agent being controlled as a function of the measured value, in order that the reduction of the metal ions of metals that are more noble than iron is prevented.

2.  Process according to Claim 1, **characterized in that** residues which contain metallic aluminium are subjected to a washing operation.

3.  Process according to Claim 1 or 2,
    **characterized in that** fly ash from refuse incineration plants is converted into material which can be landfilled.

**4.** Process according to the preceding claims, **characterized in that** the washing operation is carried out at an acid pH, preferably at a pH of from 3 to 5.

**5.** Process according to one of Claims 1 to 3, **characterized in that** the washing operation is carried out at an alkaline pH, preferably at a pH of from 7 to 12.

**6.** Process according to one of Claims 1 to 5, **characterized in that** an oxidizing agent is also added to the washing liquid before the washing operation.

**7.** Process according to one of the preceding claims, **characterized in that** an oxidizing agent which releases oxygen is used.

**8.** Process according to one of the preceding claims, **characterized in that** the oxidizing agent used is $H_2O_2$, preferably in the form of an at least 30% strength solution.

**9.** Process according to one of the preceding claims, **characterized in that** it is carried out with a redox potential of $\geq$+100 mV.

**Revendications**

**1.** Procédé pour convertir des résidus d'incinération d'ordures qui contiennent des composants métalliques moins nobles que le fer en un matériau apte à être déposé en décharge, au moyen d'une opération de lavage par mise en suspension des résidus dans un liquide aqueux de lavage, **caractérisé en ce que** l'on soumet les résidus dispersés dans le liquide de lavage à des conditions oxydantes pour faire passer les composants métalliques qui sont moins nobles que le fer à un étage d'oxydation plus élevé, **en ce que** pendant l'opération de lavage, on ajoute un agent d'oxydation à la suspension, que l'on mesure le potentiel redox du liquide de lavage et que l'on commande le dosage de l'agent d'oxydation en fonction de la valeur mesurée, pour empêcher la réduction des ions métalliques des métaux plus nobles que le fer.

**2.** Procédé selon la revendication 1, **caractérisé en ce que** l'on soumet à une opération de lavage des résidus qui contiennent de l'aluminium métallique.

**3.** Procédé selon les revendications 1 ou 2, **caractérisé en ce que** l'on convertit en un matériau apte à être déposé en décharge des cendres volantes qui proviennent d'installations d'incinération d'ordures.

**4.** Procédé selon l'une des revendications précédentes, **caractérisé en ce que** l'on réalise l'opération de lavage à une valeur acide du pH et de préférence à un pH d'une valeur de 3 à 5.

**5.** Procédé selon l'une des revendications 1 à 3,
**caractérisé en ce que** l'on réalise l'opération de lavage à une valeur alcaline du pH et de préférence à un pH d'une valeur de 7 à 12.

**6.** Procédé selon l'une des revendications 1 à 5,
**caractérisé en ce que** l'on ajoute également un agent d'oxydation au liquide de lavage avant l'opération de lavage.

**7.** Procédé selon l'une des revendications précédentes, **caractérisé en ce que** l'on utilise un agent d'oxydation qui libère de l'oxygène.

**8.** Procédé selon l'une des revendications précédentes, **caractérisé en ce que** l'on utilise comme agent d'oxydation de l'$H_2O_2$, de préférence sous la forme d'une solution à au moins 30 %.

**9.** Procédé selon l'une des revendications précédentes, **caractérisé en ce que** l'on travaille à un potentiel rédox $\geq$+100 mV.

**Fig. 1**

**Fig. 2**